# FASCICULE DE BREVET EUROPEEN

(11) **EP 2 552 719 B1**
(45) Date de publication et mention de la délivrance du brevet: **05.10.2016**
(21) Numéro de dépôt: 11713994.9
(22) Date de dépôt: 25.03.2011
(51) Int. Cl.: B60H 3/06

(54) **INSTALLATION DE VENTILATION, DE CHAUFFAGE ET/OU DE CLIMATISATION AGENCÉE POUR REGENERER UN FILTRE ET PROCEDE DE MISE EN OEUVRE**
HEIZ-, LÜFTUNGS- UND/ODER KLIMAANLAGE ZUR REGENERIERUNG EINES FILTERS UND IMPLEMENTIERUNGSVERFAHREN
HEATING, VENTILATION AND/OR AIR CONDITIONING INSTALLATION DESIGNED TO REGENERATE A FILTER, AND METHOD OF IMPLEMENTATION

(30) Priorité: 31.03.2010 FR 1001316
(43) Date de publication de la demande: 06.02.2013
(73) Titulaire: Valeo Systèmes Thermiques, 78321 Le Mesnil St Denis Cedex (FR)
(72) Inventeur: LOUP, Didier, F-78310 Maurepas (FR); FEUILLARD, Vincent, F-78320 Le Mesnil Saint Denis (FR); MARTINELL, Amanda, F-78650 Saulx Marchais (FR)
(86) Numéro de dépôt international: PCT/EP2011/054579
(87) Numéro de publication internationale: WO 2011/120874

(56) Documents cités:
- DE-C1- 19 823 796
- FR-A1- 2 582 999
- FR-A1- 2 845 642
- FR-A1- 2 848 500
- US-A1- 2007 227 107

## Description

### Domaine technique de l'invention.

L'invention est du domaine des installations de ventilation, de chauffage et/ou de climatisation d'un véhicule automobile. Elle a pour objet une telle installation pourvue d'un filtre apte à capter des polluants véhiculés par un flux d'air circulant à l'intérieur de ladite installation, cette dernière étant dotée de moyens de régénération dudit filtre. Elle a aussi pour objet un procédé pour la mise en oeuvre de ladite installation en un mode de régénération du filtre.

### Etat de la technique.

Un véhicule automobile est couramment équipé d'une installation de ventilation, de chauffage et/ou de climatisation pour modifier les paramètres aérothermiques de l'air contenu à l'intérieur de l'habitacle du véhicule. L'installation est principalement constituée d'un boîtier pourvu d'une bouche d'admission d'air extérieur, d'une bouche d'admission d'air de recyclage et d'une bouche de délivrance d'air. La bouche d'admission d'air extérieur est ménagée à travers le boîtier pour permettre une admission d'un flux d'air extérieur depuis l'extérieur du véhicule vers le boîtier. La bouche d'admission d'air de recyclage est ménagée à travers le boîtier pour permettre une admission d'un flux d'air de recyclage depuis l'habitacle du véhicule vers le boîtier. Le boîtier est équipé d'un volet de recyclage qui est prévu pour prendre plusieurs positions entre une position de fermeture complète de la bouche d'admission d'air de recyclage, et une position au moins partiellement ouverte. La bouche de délivrance d'air est ménagée à travers le boîtier pour permettre une évacuation hors du boîtier vers l'habitacle d'un flux d'air traité thermiquement issu du flux d'air extérieur et/ou du flux d'air de recyclage. La bouche de délivrance d'air est pourvue d'un volet de distribution d'air qui est mobile entre une position d'ouverture dans laquelle le volet distribution d'air autorise un passage d'air à travers la bouche de délivrance d'air et une position de fermeture dans laquelle le volet distribution d'air interdit un tel passage d'air.

Le boîtier loge un pulseur apte à prélever le flux d'air extérieur et/ou le flux d'air de recyclage. Le boîtier délimite un volume amont qui est pourvu de la bouche d'admission d'air extérieur et de la bouche d'admission d'air de recyclage. Le boîtier délimite aussi un volume aval qui est pourvu de la bouche de délivrance d'air. Le pulseur est interposé entre le volume amont et le volume aval pour faire circuler le flux d'air, indifféremment extérieur et/ou de recyclage, depuis le volume amont vers le volume aval.

Le boîtier loge également des moyens de traitement thermique pour modifier une température d'un flux d'air prélevé, indifféremment constitué du flux d'air extérieur et/ou du flux d'air de recyclage, en procurant le flux d'air traité thermiquement. Les moyens de traitement thermique sont notamment un radiateur qui est prévu pour réchauffer le flux d'air prélevé et un évaporateur qui est à même de refroidir le flux d'air prélevé. L'évacuation du flux d'air traité thermiquement hors du boîtier est réalisée par l'intermédiaire de la bouche de délivrance d'air. Les moyens de traitement thermique du flux d'air prélevé sont logés à l'intérieur du volume aval.

Il en découle qu'en mode de fonctionnement dit « normal » de l'installation, le flux d'air prélevé circule à l'intérieur du volume amont, puis à travers le pulseur, puis à travers l'évaporateur et éventuellement à travers le radiateur avant d'être évacué hors du boîtier vers l'habitacle.

Le boîtier loge un filtre apte à capter les polluants véhiculés par le flux d'air prélevé, tel qu'un filtre à charbon actif. On pourra par exemple se reporter au document FR 2,845,642 (PEUGEOT CITROEN AUTOMOBILES SA) qui décrit une telle installation dans laquelle le filtre est logé à l'intérieur du volume aval, plus particulièrement entre le pulseur et l'évaporateur.

L'installation est pourvue de moyens de régénération du filtre qui permettent une désorption des polluants préalablement captés et leur évacuation hors du boîtier vers l'extérieur du véhicule. De tels moyens comprennent un conduit de dérivation qui s'étend entre une première ouverture ménagée à travers le boîtier entre le filtre et l'évaporateur et une deuxième ouverture ménagée à travers le boîtier entre le volet de recyclage et la bouche d'admission d'air extérieur. Le conduit de dérivation loge un pulseur additionnel pour faire circuler un flux d'air de régénération depuis la première ouverture vers la deuxième ouverture. La première ouverture est équipée d'un premier volet mobile entre une position d'ouverture dans laquelle le premier volet autorise un passage d'air à travers la première ouverture et une position de fermeture dans laquelle le premier volet interdit un tel passage d'air. La deuxième ouverture est équipée d'un deuxième volet mobile entre une position d'ouverture dans laquelle le deuxième volet autorise un passage d'air à travers la deuxième ouverture et une position de fermeture dans laquelle le deuxième volet interdit un tel passage d'air.

Les moyens de régénération comprennent également une résistance électrique équipant le filtre, la résistance électrique étant prévue pour chauffer le filtre par effet Joule et permettre de ce fait une désorption des polluants préalablement retenus.

En mode de fonctionnement dit « régénération du filtre », il convient de placer en position d'ouverture le volet de recyclage pour permettre un passage du flux d'air de recyclage depuis l'habitacle vers le volume amont. Il est nécessaire de placer en position d'ouverture le premier volet et le deuxième volet pour permettre au flux d'air de recyclage de circuler à l'intérieur de la conduite de dérivation. Il faut de surcroît placer en position de fermeture le volet de distribution d'air. La résistance électrique est mise en marche. Dans ces conditions, le flux d'air de recyclage traverse le pulseur, puis le filtre qui est régénéré, puis emprunte le conduit de dérivation pour être évacué hors du boîtier par l'intermédiaire de la bouche d'admission d'air extérieur.

Une telle installation s'avère encombrante de par la présence du conduit de dérivation qui est agencé en U hors du boîtier et qui tend à constituer un obstacle lors de la mise en place de ladite installation. De plus, le fait de ménager la première ouverture et la deuxième ouverture à travers le boîtier et de les équiper respectivement du premier volet et du deuxième volet s'avère contraignant.

De plus, une telle installation comprend une multiplicité de volets, à savoir un volet de recyclage, un premier volet, un deuxième volet et au moins un volet de distribution d'air dont la manoeuvre respective est nécessaire pour la mise en oeuvre de ladite installation en mode « régénération du filtre ». Une telle multiplicité constitue un inconvénient pour une mise en oeuvre simple de ladite installation.

Enfin, une telle installation comprend un pulseur additionnel dont la mise en oeuvre est nécessaire en mode « régénération du filtre », ce qui génère une consommation électrique supplémentaire de ladite installation.

### Objet de l'invention.

Le but de la présente invention est de proposer une installation de ventilation, de chauffage et/ou de climatisation d'un véhicule automobile qui est simple structurellement, qui comporte un minimum de pulseur et de volet, pour offrir une installation dont la mise en oeuvre en un mode « régénération du filtre » est simple et efficace tout en permettant une régénération du filtre sans risque de pollution de l'air contenu à l'intérieur de l'habitacle.

Une installation de la présente invention est une installation de ventilation, de chauffage et/ou de climatisation d'un véhicule automobile. Ladite installation comprend un boîtier logeant au moins un pulseur interposé entre un volume amont et un volume aval. Le volume amont et le volume aval sont délimités par le boîtier. Le volume amont loge une chambre de mélange pourvue d'un volet de mélange. Le boîtier loge un filtre ledit filtre étant logé à l'interieur du volume aval, en étant interposé entre le pulseur et des moyens de traitement thermique. Ladite installation est équipée de moyens de régénération du filtre. Les moyens de régénération du filtre comprennent un espace interstitiel reliant le volume amont et le volume aval. Ledit espace interstitiel étant ménagé à l'interieur du boîtier.

L'espace interstitiel est avantageusement adjacent au pulseur et à la chambre de mélange.

Les moyens de régénération du filtre comprennent avantageusement le volet de mélange qui constitue un moyen d'obturation d'un débouché de l'espace interstitiel à l'intérieur du volume amont.

Les moyens de régénération du filtre comprennent préférentiellement une résistance électrique équipant le filtre, la résistance électrique étant associée à une source d'alimentation électrique.

Les moyens de régénération du filtre comprennent préférentiellement au moins un volet de distribution d'air équipant une bouche de délivrance d'air.

Le filtre est par exemple logé à l'intérieur du volume amont.

Le filtre est par exemple interposé entre la chambre de mélange et le pulseur.

Le filtre est par exemple interposé entre une bouche d'admission d'air extérieur et la chambre de mélange.

Le filtre est par exemple logé à l'intérieur du volume aval, en étant interposé entre le pulseur et des moyens de traitement thermique.

Un procédé de régénération du filtre équipant une telle installation est principalement reconnaissable en ce que le procédé consiste à effectuer les opérations suivantes :
- placer en une position de régénération le volet de mélange de manière à laisser libre le débouché de l'espace interstitiel, une bouche d'admission d'air extérieur et une bouche d'admission d'air de recyclage,
- placer en position de fermeture le volet de distribution d'air,
- mettre en marche la source d'alimentation électrique de la résistance électrique,
- mettre en marche le pulseur.

### Description des figures.

La présente invention sera mieux comprise à la lecture de la description qui va en être faite d'exemples de réalisation, en relation avec les figures des planches annexées, dans lesquelles :
La fig.1 est une illustration schématique d'une installation de ventilation, de chauffage et/ou de climatisation selon une première variante de réalisation de la présente invention, ladite installation étant représentée en mode régénération du filtre.
La fig.2 est une illustration schématique d'une installation de ventilation, de chauffage et/ou de climatisation selon une deuxième variante de réalisation de la présente invention, ladite installation étant représentée en mode régénération du filtre.
Les fig.3 à fig.6 sont des illustrations schématiques d'une installation de ventilation, de chauffage et/ou de climatisation selon une troisième variante de réalisation de la présente invention, ladite installation étant représentée dans divers modes respectifs de fonctionnement.
Les fig.7 à fig.10 sont des illustrations schématiques d'une installation de ventilation, de chauffage et/ou de climatisation selon une quatrième variante de réalisation de la présente invention, ladite installation étant représentée dans divers modes respectifs de fonctionnement.
Les fig.11 à fig.14 sont des illustrations schématiques d'une installation de ventilation, de chauffage et/ou de climatisation selon une cinquième variante de réalisation de la présente invention, ladite installation étant représentée dans divers modes respectifs de fonctionnement.

Sur les figures, un véhicule automobile est équipé d'une installation 1 de ventilation, de chauffage et/ou de climatisation pour modifier les paramètres aérothermiques de l'air contenu à l'intérieur de l'habitacle du véhicule. Une telle modification est obtenue à partir de la délivrance à l'intérieur de l'habitacle d'au moins un flux d'air traité thermiquement 2. A cet effet, ladite installation 1 comprend un boîtier 3 réalisé en matière plastique et logé sous une planche de bord et/ou une boîte à eau du véhicule. Le boîtier 3 comprend une bouche d'admission d'air extérieur 4 qui permet le passage d'un flux d'air extérieur 5 entre l'extérieur 6 du véhicule et un volume interne 7 délimité par le boîtier 3. Le boîtier 3 comprend aussi une bouche d'admission d'air de recyclage 8 qui permet le passage d'un flux d'air de recyclage 9 entre l'habitacle 10 du véhicule et le volume interne 7. Le boîtier 3 comprend enfin trois bouches de délivrance d'air 11,12,13, telle qu'une bouche de dégivrage/désembuage 11, une bouche d'aération de tête 12 et une bouche d'aération de pieds 13. L'air délivré à travers la bouche de dégivrage/désembuage 11 permet de ventiler une zone avant de l'habitacle où se trouve notamment le pare-brise du véhicule, la bouche d'aération de tête 12 permet de ventiler une zone supérieure de l'habitacle tandis que la bouche d'aération de pieds 13 permet de ventiler une zone inférieure de l'habitacle. Chaque bouche de délivrance d'air 11,12,13 est pourvue d'un volet de distribution d'air respectif 14 qui est manoeuvrable entre une position d'ouverture dans laquelle le volet de distribution d'air 14 autorise un passage d'air à travers la bouche de délivrance d'air 11,12,13 que le volet de distribution d'air 14 équipe et une position de fermeture dans laquelle le volet de distribution d'air 14 interdit un tel passage.

Le boîtier 3 loge un pulseur 15 pour faire circuler l'air à l'intérieur du boîtier 3, et plus particulièrement depuis au moins l'une des bouches d'admission d'air 4,8 vers au moins l'une des bouches de délivrance d'air 11,12,13. Le pulseur 15 partage le volume interne 7 en deux volumes distincts dont un volume amont 16 et un volume aval 17. Le volume amont 16 est équipé des bouches d'admission d'air 4,8 tandis que le volume aval 17 est pourvu des bouches de délivrance d'air 11,12,13. Le volume amont 16 comprend une chambre de mélange 18 à l'intérieur de laquelle le flux d'air extérieur 5 et le flux d'air de recyclage 9 sont susceptibles d'être mélangés l'un avec l'autre. La chambre de mélange 18 comporte une bouche d'arrivée d'air extérieur 19 par l'intermédiaire de laquelle le flux d'air extérieur 5 en provenance de la bouche d'admission d'air extérieur 4 pénètre à l'intérieur de la chambre de mélange 18. La chambre de mélange 18 est également pourvue de la bouche d'admission d'air de recyclage 8, de telle sorte que le flux d'air de recyclage 9 pénètre directement depuis l'habitacle 10 à l'intérieur de la chambre de mélange 18 par l'intermédiaire de la bouche d'admission d'air de recyclage 8. Le boîtier 3 est équipé d'un volet de mélange 20 qui est mobile entre au moins une position de recyclage dans laquelle le volet de mélange 20 obture la bouche d'arrivée d'air extérieur 19 et une position extérieure dans laquelle le volet de mélange 20 obture la bouche d'admission d'air de recyclage 8. Le volet de mélange 20 est susceptible d'être placé en une position intermédiaire dans laquelle le volet de mélange 20 obture partiellement la bouche d'arrivée d'air extérieur 19 et la bouche d'admission d'air de recyclage 8.

Le boîtier 3 loge également des moyens de traitement thermique 21,22 de l'air préalablement à son évacuation hors du boîtier 3 vers l'habitacle 10. Les moyens de traitement thermique 21,22 sont notamment un évaporateur 21 prévu pour refroidir l'air qui le traverse et un radiateur 22 apte à réchauffer cet air. Le radiateur 22 est éventuellement associé à des résistances électriques de type résistance à coefficient de température positif, communément dénommées « CTP ». Les moyens de traitement thermique 21,22 sont placés à l'intérieur du volume aval 17.

Le boîtier 3 loge enfin un filtre 23 apte à retenir, notamment par adsorption, des polluants véhiculés par l'air circulant à l'intérieur du boîtier 3. Le filtre 23 est par exemple un filtre à charbon actif qui est pourvu d'une résistance électrique 24 en relation avec une source d'alimentation électrique 25. La mise en oeuvre de cette dernière permet de chauffer par effet Joule la résistance électrique 24, et par conséquent le filtre 23. Un tel échauffement du filtre 23 à une température de l'ordre de 60°C à 120°C induit une désorption des polluants. En variante, le filtre 23 est lui-même électriquement conducteur de telle sorte que la résistance électrique 24 est constituée du filtre 23 lui-même, le passage d'un courant électrique délivré par la source d'alimentation électrique 25 permettant une désorption des polluants sans nécessité d'équiper le filtre 23 d'une résistance électrique.

L'installation 1 de la présente invention loge avantageusement un espace interstitiel 27 qui est ménagé à l'intérieur du boîtier 3 pour permettre un passage d'air depuis le volume amont 16 vers le volume aval 17 ou inversement depuis le volume aval 17 vers le volume amont 16. L'espace interstitiel est inclus à l'intérieur du boîtier 3. L'espace interstitiel 27 est notamment ménagé entre une paroi 28 délimitant le boîtier 3 et le pulseur 15. La paroi 28 est par exemple une paroi inférieure du boîtier 3 qui participe de la délimitation du volume interne 7. L'espace interstitiel 27 est d'une conformation sensiblement rectiligne et s'étend longitudinalement le long du pulseur 15, de la chambre de mélange 18, et éventuellement du filtre 23, mais à l'intérieur du boîtier 3. L'espace interstitiel 2 constitue un chemin de contournement du pulseur 15, de la chambre de mélange 18, et éventuellement du filtre 23, pour ramener de l'air ayant traversé ces éléments depuis le volume aval 17 vers le volume amont 16, en évitant que cet air ne traverse les moyens de traitement thermiques 21,22, pour éviter des pertes de charge.

L'espace interstitiel 27 comporte un débouché 32 ménagé à l'intérieur du volume amont 16. L'espace interstitiel 27 est un volume vide exempt de pulseur ou analogue. L'espace interstitiel 27 n'est équipé d'aucun volet ou analogue apte à interdire un passage d'air à l'intérieur de l'espace interstitiel. Ce dernier ne génère aucun encombrement supplémentaire par rapport au boîtier 3 en étant ménagé à l'intérieur de ce dernier.

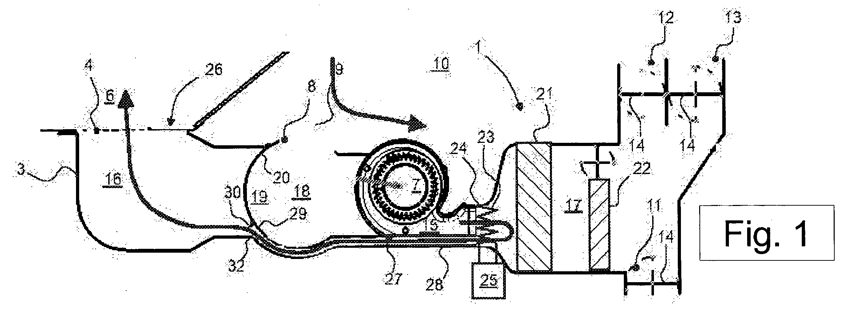

Sur les fig.1 à fig.6, le volet de mélange 20 est un volet tambour comprenant une portion cylindrique 29 pourvue d'une platine d'obturation 30 du débouché 32 de l'espace interstitiel 27. La platine d'obturation 30 est par exemple ménagée radialement par rapport à un axe de rotation 31 du volet de mélange 20. La platine d'obturation 30 est agencée pour venir en butée contre le débouché 32 de l'espace interstitiel 27. Ces dispositions visent à empêcher une circulation d'air depuis le volume amont 16 et le volume aval 17 par l'intermédiaire de l'espace interstitiel 27 en mode « tout recyclage ». Ces dispositions visent aussi à permettre une circulation d'air depuis le volume amont 16 et le volume aval 17 par l'intermédiaire de l'espace interstitiel 27 en mode « recyclage partiel » ou « tout extérieur ». Ces dispositions visent aussi à permettre une circulation d'air depuis le volume aval 17 et le volume amont 16par l'intermédiaire de l'espace interstitiel 27 en mode « régénération ».

Sur la fig.1, le filtre 23 est logé à l'intérieur du volume aval 17, en étant interposé entre le pulseur 15 et lesdits moyens de traitement thermique 21,22. L'espace interstitiel 27 est adjacent à la chambre de mélange 18, au pulseur 15 et au filtre 23. L'espace interstitiel 27 est par exemple ménagé le long de la chambre de mélange 18, du pulseur 15 et d'une extrémité du filtre 23. Ces dispositions sont telles que le filtre 23 est apte à retenir des poussières en provenance du pulseur 15. Le filtre 23 est également apte à retenir les polluants d'un flux d'air de recyclage et/ou d'un flux d'air extérieur admis à l'intérieur de la chambre de mélange 18.

En mode de fonctionnement « régénération du filtre » tel qu'illustré sur la fig.1, le pulseur 15 est activé. La source d'alimentation électrique 25 est active de telle sorte que le filtre 23 est chauffé pour désorber les polluants. Le volet de mélange 20 obture la bouche d'arrivée d'air extérieur 19. Le volet de mélange 20 est placé en position de régénération dans laquelle la platine d'obturation 30 laisse libre le débouché 32 de l'espace interstitiel 27 de telle sorte que l'air peut s'écouler entre le volume aval 17 et le volume amont 16 par l'intermédiaire de l'espace interstitiel 27. Les volets de distribution d'air 14 sont tous placés en position de fermeture.

Ces dispositions permettent un mode de fonctionnement « régénération du filtre » dans lequel les polluants adsorbés par le filtre 23 sont évacués hors du boîtier 3 après leur désorption. Le flux d'air de recyclage 9 pénètre à l'intérieur de la chambre de mélange 18 par l'intermédiaire de la bouche d'admission d'air de recyclage 8. Le flux d'air de recyclage 9 traverse ensuite le pulseur 15 et pénètre à l'intérieur du volume aval 17. Le flux d'air de recyclage 9 traverse alors le filtre 23 en y collectant les polluants. Les volets de distribution d'air 14 étant tous placés en position de fermeture, le volume aval 17 est un espace clos ne comportant que l'espace interstitiel 27 comme échappatoire pour le flux d'air de recyclage 9. Ce dernier emprunte donc l'espace interstitiel 27 pour rejoindre le volume amont 16. Le flux d'air de recyclage 9 chargé des polluants est ensuite évacué hors du boîtier 3 par l'intermédiaire de la bouche d'admission d'air extérieur 4. Il en résulte une évacuation des polluants hors du boîtier 3 sans aucun risque de polluer l'air contenu à l'intérieur de l'habitacle 10.

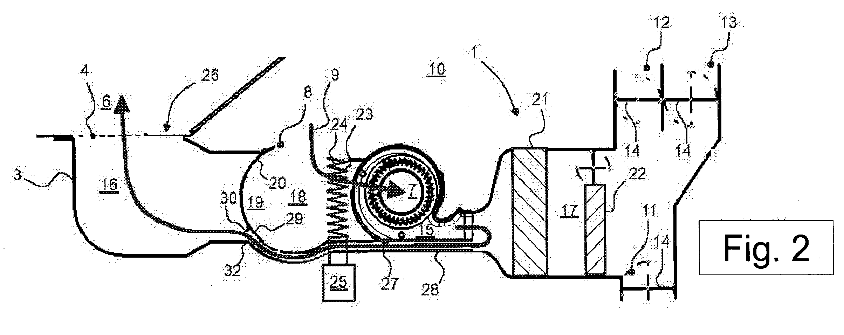

Sur les fig.2 à fig.14, le filtre 23 est disposé à l'intérieur du volume amont 16. Ces dispositions sont telles que le filtre 23 est aisément accessible soit par l'intermédiaire de la boîte à eau, soit par l'intermédiaire d'une boîte à gants du véhicule.

Plus particulièrement sur la fig.2, le filtre 23 est interposé entre la chambre de mélange 18 et le pulseur 15. Dans ces conditions, le filtre 23 est apte à retenir les polluants d'un flux d'air de recyclage et/ou d'un flux d'air extérieur admis à l'intérieur de la chambre de mélange 18.

En mode de fonctionnement « régénération du filtre » tel qu'illustré sur la fig.2, le pulseur 15 est activé. La source d'alimentation électrique 25 est active de telle sorte que le filtre 23 est chauffé pour désorber les polluants. Le volet de mélange 20 obture la bouche d'arrivée d'air extérieur 19. Le volet de mélange 20 est placé en position de régénération dans laquelle la platine d'obturation 30 laisse libre le débouché 32 de l'espace interstitiel 27 de telle sorte que l'air peut s'écouler entre le volume amont 16 et le volume aval 17 par l'intermédiaire de l'espace interstitiel 27. Les volets de distribution d'air 14 sont tous placés en position de fermeture.

Ces dispositions permettent un mode de fonctionnement « régénération du filtre » dans lequel les polluants adsorbés par le filtre 23 sont évacués hors du boîtier 3 après leur désorption. Le flux d'air de recyclage 9 pénètre à l'intérieur de la chambre de mélange 18 par l'intermédiaire de la bouche d'admission d'air de recyclage 8. Le flux d'air de recyclage 9 traverse ensuite le filtre 23 en y collectant les polluants. Le flux d'air de recyclage 9 traverse ensuite le pulseur 15 et pénètre à l'intérieur du volume aval 17. Les volets de distribution d'air 14 étant tous placés en position de fermeture, le volume aval 17 est un espace clos ne comportant que l'espace interstitiel 27 comme échappatoire pour le flux d'air de recyclage 9. Ce dernier emprunte donc l'espace interstitiel 27 pour rejoindre le volume amont 16. Le flux d'air de recyclage 9 chargé des polluants est ensuite évacué hors du boîtier 3 par l'intermédiaire de la bouche d'admission d'air extérieur 4. Il en résulte une évacuation des polluants hors du boîtier 3 sans aucun risque de polluer l'air contenu à l'intérieur de l'habitacle 10.

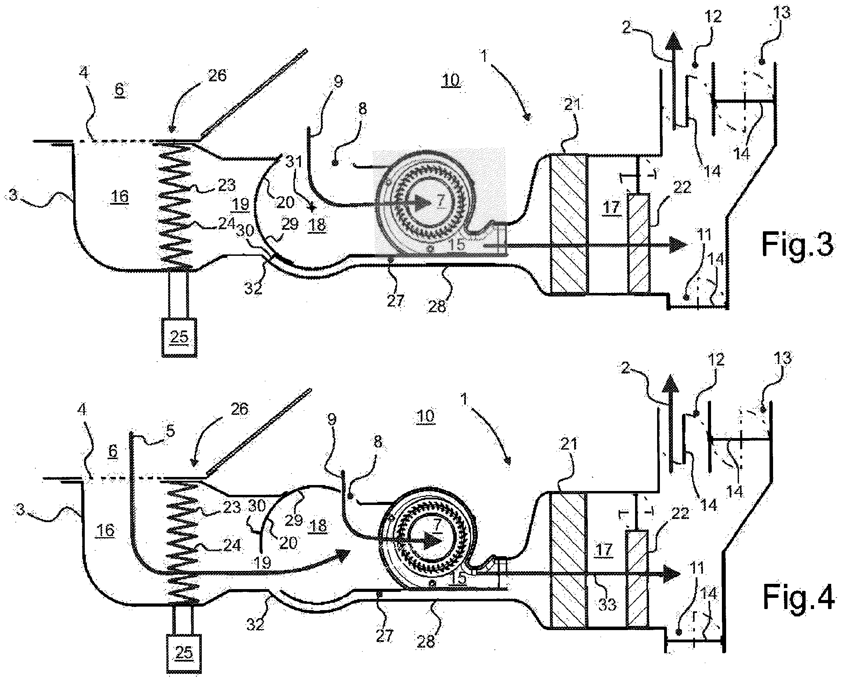

Sur les fig.3 à fig.6, le filtre 23 est placé en un passage d'air extérieur 26 qui est interposé entre la bouche d'admission d'air extérieur 4 et la bouche d'arrivée d'air extérieur 19 de la chambre de mélange 18, de telle sorte qu'en mode de fonctionnement « tout recyclage », « tout extérieur » et « recyclage partiel » de l'installation, seul le flux d'air extérieur 5 traverse le filtre 23 avant de pénétrer à l'intérieur de la chambre de mélange 18.

Sur la fig.3, le pulseur 15 est activé. La source d'alimentation électrique 25 est inactive de telle sorte que le filtre 23 n'est pas chauffé pour désorber les polluants. Le volet de mélange 20 obture la bouche d'arrivée d'air extérieur 19 de telle sorte que seul le flux d'air de recyclage 9 pénètre à l'intérieur de la chambre de mélange 18. La platine d'obturation 30 ferme le débouché 32 de l'espace interstitiel 27 de telle sorte que seul le pulseur 15 constitue un passage d'air entre le volume amont 16 et le volume aval 17. Au moins un volet de distribution d'air 14 est en position d'ouverture.

Ces dispositions permettent un mode de fonctionnement « tout recyclage » dans lequel seul l'air contenu à l'intérieur de l'habitacle 10 est traité thermiquement. Selon ce mode de fonctionnement, le flux d'air de recyclage 9 pénètre à l'intérieur de la chambre de mélange 18 par l'intermédiaire de la bouche d'admission d'air de recyclage 8 à partir de son aspiration par le pulseur 15. Le flux d'air de recyclage 9 traverse le pulseur 15. Puis, le flux d'air de recyclage 9 est admis à l'intérieur du volume aval 17 à l'intérieur duquel le flux d'air de recyclage 9 est traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

Sur la fig.4, le pulseur 15 est activé. La source d'alimentation électrique 25 est inactive de telle sorte que le filtre 23 n'est pas chauffé pour désorber les polluants. Le volet de mélange 20 obture partiellement la bouche d'arrivée d'air extérieur 19 de telle sorte que le flux d'air extérieur 5 pénètre à l'intérieur de la chambre de mélange 18. Le volet de mélange 20 obture partiellement la bouche d'admission d'air de recyclage 8 de telle sorte que le flux d'air de recyclage 9 pénètre à l'intérieur de la chambre de mélange 18. La platine d'obturation 30 laisse libre le débouché 32 de l'espace interstitiel 27 de telle sorte que l'air peut s'écouler entre le volume amont 16 et le volume aval 17 par l'intermédiaire de l'espace interstitiel 27. Au moins un volet de distribution d'air 14 est en position d'ouverture.

Ces dispositions permettent un mode de fonctionnement « recyclage partiel » dans lequel l'air contenu à l'intérieur de l'habitacle 10 est mélangé à de l'air extérieur au véhicule avant d'être traité thermiquement. Selon ce mode de fonctionnement, le flux d'air de recyclage 9 pénètre à l'intérieur de la chambre de mélange 18 par l'intermédiaire de la bouche d'admission d'air de recyclage 8 à partir de son aspiration par le pulseur 15. Le flux d'air extérieur 5 pénètre à l'intérieur du volume amont 16 par l'intermédiaire de la bouche d'admission d'air extérieur 4. Le flux d'air extérieur 5 traverse ensuite le filtre 23 qui retient les polluants. Le flux d'air extérieur 5 pénètre ensuite à l'intérieur de la chambre de mélange 18 par l'intermédiaire de la bouche d'arrivée d'air extérieur 19. Le flux d'air extérieur 5 et le flux d'air de recyclage 9 sont mixés l'un à l'autre à l'intérieur de la chambre de mélange 18 en un flux d'air mélangé 33. Ce dernier traverse le pulseur 15 et pénètre à l'intérieur du volume aval 17 pour y être traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

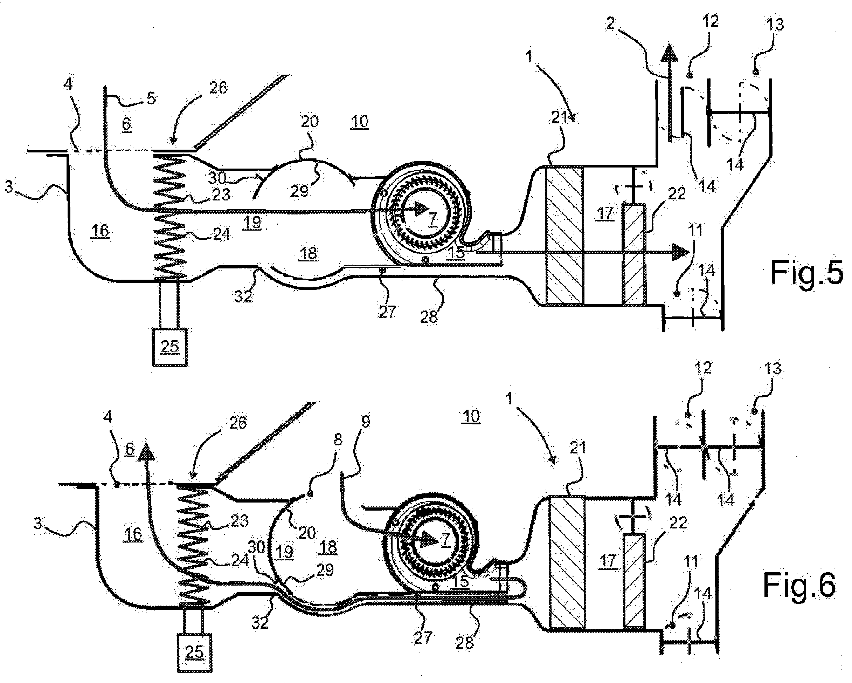

Sur la fig.5, le pulseur 15 est activé. La source d'alimentation électrique 25 est inactive de telle sorte que le filtre 23 n'est pas chauffé pour désorber les polluants. Le volet de mélange 20 obture la bouche d'admission d'air de recyclage 8 de telle sorte que seul le flux d'air extérieur 5 pénètre à l'intérieur de la chambre de mélange 18. La platine d'obturation 30 laisse libre le débouché 32 de l'espace interstitiel 27 de telle sorte que l'air peut s'écouler entre le volume amont 16 et le volume aval 17 par l'intermédiaire de l'espace interstitiel 27. Au moins un volet de distribution d'air 14 est en position d'ouverture.

Ces dispositions permettent un mode de fonctionnement « tout air extérieur » dans lequel seul le flux d'air extérieur 5 est traité thermiquement. Le flux d'air extérieur 5 pénètre à l'intérieur du volume amont 16 par l'intermédiaire de la bouche d'admission d'air extérieur 4. Le flux d'air extérieur 5 traverse ensuite le filtre 23 qui retient les polluants. Le flux d'air extérieur 5 pénètre ensuite à l'intérieur de la chambre de mélange 18 par l'intermédiaire de la bouche d'arrivée d'air extérieur 19. Le flux d'air extérieur 5 traverse le pulseur 15 et pénètre à l'intérieur du volume aval 17 pour y être traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

Sur la fig.6, le pulseur 15 est activé. La source d'alimentation électrique 25 est active de telle sorte que le filtre 23 est chauffé pour désorber les polluants. Le volet de mélange 20 obture la bouche d'arrivée d'air extérieur 19. Le volet de mélange 20 est placé en position de régénération dans laquelle la platine d'obturation 30 laisse libre le débouché 32 de l'espace interstitiel 27 de telle sorte que l'air peut s'écouler entre le volume amont 16 et le volume aval 17 par l'intermédiaire de l'espace interstitiel 27. Les volets de distribution d'air 14 sont tous placés en position de fermeture.

Ces dispositions permettent un mode de fonctionnement « régénération du filtre » dans lequel les polluants adsorbés par le filtre 23 sont évacués hors du boîtier 3 après leur désorption. Le flux d'air de recyclage 9 pénètre à l'intérieur de la chambre de mélange 18 par l'intermédiaire de la bouche d'admission d'air de recyclage 8. Le flux d'air de recyclage 9 traverse ensuite le pulseur 15 et pénètre à l'intérieur du volume aval 17. Les volets de distribution d'air 14 étant tous placés en position de fermeture, le volume aval 17 est un espace clos ne comportant que l'espace interstitiel 27 comme échappatoire pour le flux d'air de recyclage 9. Ce dernier emprunte donc l'espace interstitiel 27 pour rejoindre le volume amont 16. Le flux d'air de recyclage 9 traverse ensuite le filtre 23 en y collectant les polluants. Le flux d'air de recyclage 9 chargé des polluants est ensuite évacué hors du boîtier 3 par l'intermédiaire de la bouche d'admission d'air extérieur 4.

Il en résulte une évacuation des polluants hors du boîtier 3 sans aucun risque de polluer l'air contenu à l'intérieur de l'habitacle 10. Il en résulte également une évacuation de poussières éventuellement collectées par le filtre 23 lors de son fonctionnement en mode « tout extérieur » ou en mode « recyclage partiel » à partir d'un passage du flux d'air de recyclage 9 à travers le filtre 23 en un sens inverse à celui emprunté par le flux d'air extérieur 5 dans ces deux modes.

Il résulte de ces dispositions que le volet de mélange 20, et plus particulièrement la platine d'obturation 30 qui l'équipe, constitue avantageusement un organe autorisant ou interdisant un passage d'air à l'intérieur de l'espace interstitiel 27, de telle sorte qu'une telle installation de ventilation, de chauffage et/ou de climatisation 1 ne nécessite pas d'équiper l'espace interstitiel 27 de volets supplémentaires.

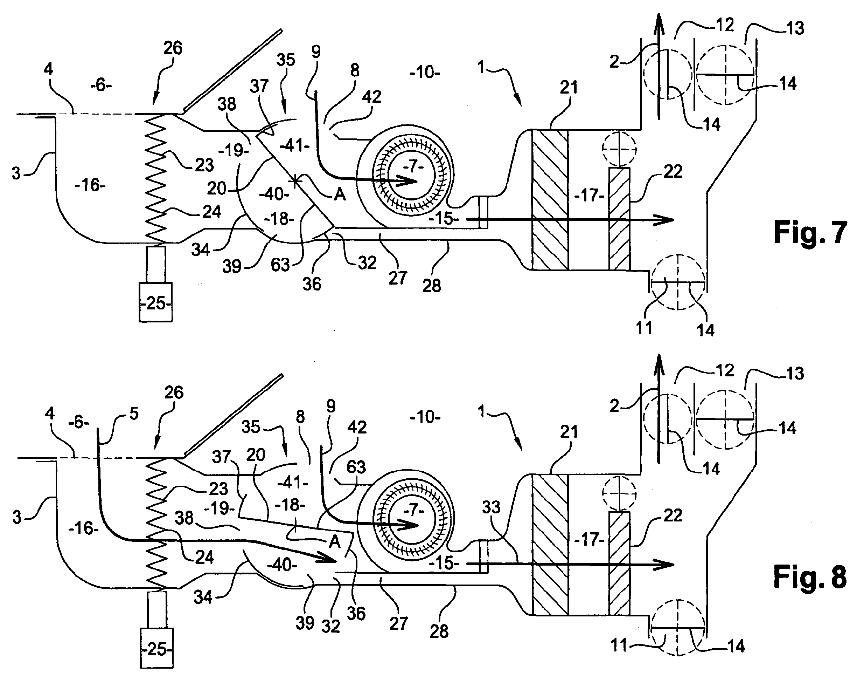

Sur les fig.7 à fig.10, le volet de mélange 20 est un volet papillon comprenant une platine centrale 63 et une partie cylindrique 34. La platine centrale 63 s'étend diamétralement à l'intérieur d'un cylindre 35 d'axe de rotation A selon lequel la partie cylindrique 34 est ménagée. La platine centrale 63 est pourvue d'un premier rebord 36 et d'un deuxième rebord 37 qui sont ménagés respectivement à chacune des extrémités de la platine centrale 63. Le premier rebord 36 et le deuxième rebord 37 sont conformés en arc cylindrique ménagé selon le cylindre 35. Le premier rebord 36 et le deuxième rebord 37 sont aptes à autoriser ou interdire un passage d'air à l'intérieur de l'espace interstitiel 27. Ces dispositions visent à empêcher une circulation d'air depuis le volume amont 16 et le volume aval 17 par l'intermédiaire de l'espace interstitiel 27 en mode « tout recyclage ». Ces dispositions visent aussi à permettre une circulation d'air depuis le volume amont 16 et le volume aval 17 par l'intermédiaire de l'espace interstitiel 27 en mode « recyclage partiel » ou « tout extérieur ». Ces dispositions visent aussi à permettre une circulation d'air depuis le volume aval 17 et le volume amont 16par l'intermédiaire de l'espace interstitiel 27 en mode « régénération ».

Le volet de mélange 20 comprend une première fenêtre 38 ménagée entre la platine centrale 63 et la partie cylindrique 34, et une deuxième fenêtre 39 ménagée entre la partie cylindrique 34 et le premier rebord 36. Le volet de mélange 20 délimite un premier volume demi-cylindrique 40 ménagé entre la platine centrale 63, la partie cylindrique 34 et le premier rebord 36. Le volet de mélange 20 délimite un deuxième volume demi-cylindrique 41 symétrique du premier volume demi-cylindrique 40 par rapport à la platine centrale 63. Le deuxième volume demi-cylindrique 41 est bordé par la platine centrale 63 et le deuxième rebord 37. Le volet de mélange 20 comporte une troisième fenêtre 42 ménagé entre le premier rebord 36 et le deuxième rebord 37, la troisième fenêtre 42 permettant une circulation d'air entre le deuxième volume demi-cylindrique 41 et l'extérieur du volet de mélange 20.

Sur la fig.7, le pulseur 15 est activé. La source d'alimentation électrique 25 est inactive de telle sorte que le filtre 23 n'est pas chauffé pour désorber les polluants. Le premier volume demi-cylindrique 40 est en communication aéraulique avec la bouche d'arrivée d'air extérieur 19 par l'intermédiaire de la première fenêtre 38. La platine centrale 63 isole le premier volume demi-cylindrique 40 du deuxième volume demi-cylindrique 41 de telle sorte que l'air en provenance de l'extérieur 6 ne peut s'écouler vers le pulseur 15. Le deuxième volume demi-cylindrique 41 est en communication aéraulique avec l'habitacle 10 par l'intermédiaire de la bouche d'admission d'air de recyclage 8 de telle sorte que le flux d'air de recyclage 9 pénètre à l'intérieur du deuxième volume demi-cylindrique 41 pour s'écouler vers le pulseur 15. Le premier rebord 36 obture le débouché 32 de l'espace interstitiel 27. Au moins un volet de distribution d'air 14 est en position d'ouverture.

Ces dispositions permettent un mode de fonctionnement « tout recyclage » dans lequel seul l'air contenu à l'intérieur de l'habitacle 10 est traité thermiquement. Selon ce mode de fonctionnement, le flux d'air de recyclage 9 pénètre à l'intérieur du deuxième volume demi-cylindrique 41 par l'intermédiaire de la bouche d'admission d'air de recyclage 8 à partir de son aspiration par le pulseur 15. Puis, le flux d'air de recyclage 9 est admis à l'intérieur du volume aval 17 à l'intérieur duquel le flux d'air de recyclage 9 est traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

Sur la fig.8, le pulseur 15 est activé. La source d'alimentation électrique 25 est inactive de telle sorte que le filtre 23 n'est pas chauffé pour désorber les polluants. Le premier volume demi-cylindrique 40 est en communication aéraulique avec la bouche d'arrivée d'air extérieur 19 par l'intermédiaire de la première fenêtre 38. Le deuxième volume demi-cylindrique, 41 est en communication aéraulique avec la bouche d'arrivée d'air extérieur 19 par l'intermédiaire de la troisième fenêtre 42. Le deuxième volume demi-cylindrique 41 est en communication aéraulique avec l'habitacle 10 par l'intermédiaire de la troisième fenêtre 42 et de la bouche d'admission d'air de recyclage 8. Le premier rebord 36 et le deuxième rebord 37 laissent libre le débouché 32 de l'espace interstitiel 27 de telle sorte que l'air peut s'écouler entre le volume amont 16 et le volume aval 17 par l'intermédiaire de l'espace interstitiel 27. Au moins un volet de distribution d'air 14 est en position d'ouverture.

Ces dispositions permettent un mode de fonctionnement « recyclage partiel » dans lequel l'air contenu à l'intérieur de l'habitacle 10 est mélangé à de l'air extérieur avant d'être traité thermiquement. Selon ce mode de fonctionnement, le flux d'air de recyclage 9 pénètre par l'intermédiaire de la bouche d'admission d'air de recyclage 8 et de la troisième fenêtre 42 à l'intérieur du deuxième volume demi-cylindrique 41 qui constitue la chambre de mélange 18. Le flux d'air extérieur 5 pénètre à l'intérieur du volume amont 16 par l'intermédiaire de la bouche d'admission d'air extérieur 4. Le flux d'air extérieur 5 traverse ensuite le filtre 23 qui retient les polluants. Le flux d'air extérieur 5 pénètre ensuite à l'intérieur de la chambre de mélange 18 par l'intermédiaire de la bouche d'arrivée d'air extérieur 19 et de la troisième fenêtre 42. Le flux d'air extérieur 5 et le flux d'air de recyclage 9 sont mixés l'un à l'autre à l'intérieur de la chambre de mélange 18 en un flux d'air mélangé 33. Ce dernier traverse le pulseur 15 et pénètre à l'intérieur du volume aval 17 pour y être traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

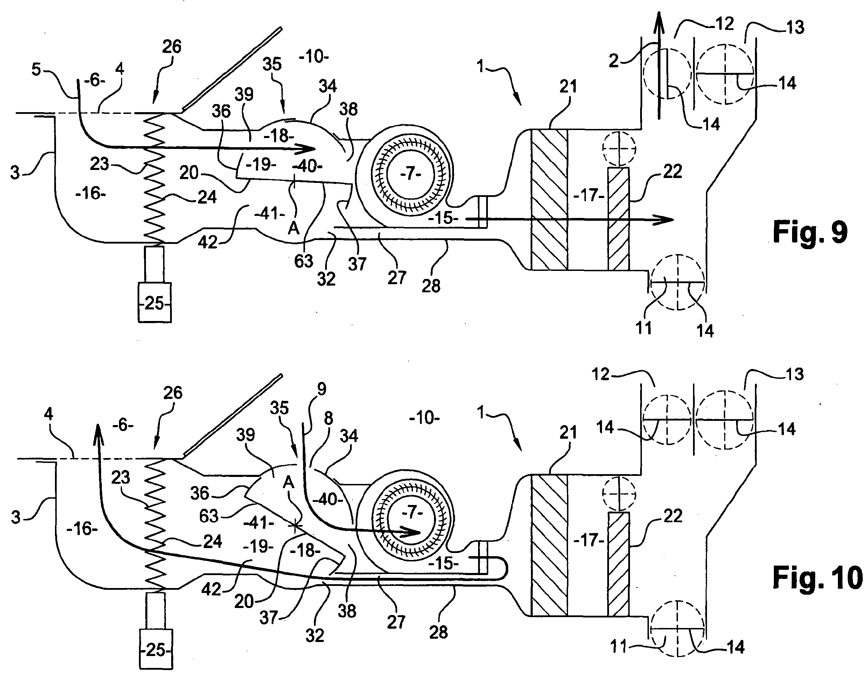

Sur la fig.9, le pulseur 15 est activé. La source d'alimentation électrique 25 est inactive de telle sorte que le filtre 23 n'est pas chauffé pour désorber les polluants. La partie cylindrique 34 du volet de mélange 20 obture la bouche d'admission d'air de recyclage 8 de telle sorte que seul le flux d'air extérieur 5 pénètre à l'intérieur du premier volume demi-cylindrique 40. Le premier rebord 36 et le deuxième rebord 37 laissent libre le débouché 32 de l'espace interstitiel 27 de telle sorte que l'air peut s'écouler entre le volume amont 16 et le volume aval 17 par l'intermédiaire de l'espace interstitiel 27. Au moins un volet de distribution d'air 14 est en position d'ouverture.

Ces dispositions permettent un mode de fonctionnement « tout air extérieur » dans lequel seul le flux d'air extérieur 5 est traité thermiquement. Le flux d'air extérieur 5 pénètre à l'intérieur du volume amont 16 par l'intermédiaire de la bouche d'admission d'air extérieur 4. Le flux d'air extérieur 5 traverse ensuite le filtre 23 qui retient les polluants. Le flux d'air extérieur 5 pénètre à l'intérieur du premier volume demi-cylindrique 40 par l'intermédiaire de la bouche d'arrivée d'air extérieur 19 et de la deuxième fenêtre 39. Le flux d'air extérieur 5 pénètre à l'intérieur du deuxième volume demi-cylindrique 41 par l'intermédiaire de la bouche d'arrivée d'air extérieur 19 et de la troisième fenêtre 42. Le flux d'air extérieur 5 est évacué hors du premier volume demi-cylindrique 40 vers le pulseur 15 par l'intermédiaire de la première fenêtre 38. Le flux d'air extérieur 5 est évacué hors du deuxième volume demi-cylindrique 41 vers le pulseur 15 par l'intermédiaire de la troisième fenêtre 42. Finalement, le flux d'air extérieur 5 traverse le pulseur 15 et pénètre à l'intérieur du volume aval 17 pour y être traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

Sur la fig.10, le pulseur 15 est activé. La source d'alimentation électrique 25 est active de telle sorte que le filtre 23 est chauffé pour désorber les polluants. La platine centrale 63 du volet de mélange 20 isole le premier volume demi-cylindrique 40 du deuxième volume demi-cylindrique 41. Le volet de mélange 20 est placé en position de régénération dans laquelle le premier rebord 36 et le deuxième rebord 37 laissent libre le débouché 32 de l'espace interstitiel 27 de telle sorte que l'air peut s'écouler entre le volume aval 17 et le volume amont 16 par l'intermédiaire de l'espace interstitiel 27. Tous les volets de distribution d'air 14 sont placés en position de fermeture.

Ces dispositions permettent un mode de fonctionnement « régénération du filtre » dans lequel les polluants adsorbés par le filtre 23 sont évacués hors du boîtier 3 après leur désorption. Le flux d'air de recyclage 9 pénètre à l'intérieur du premier volume demi-cylindrique 40 par l'intermédiaire de la bouche d'admission d'air de recyclage 8 et de la deuxième fenêtre 39. Le flux d'air de recyclage 9 traverse ensuite le pulseur 15 et pénètre à l'intérieur du volume aval 17. Les volets de distribution d'air 14 étant tous placés en position de fermeture, le volume aval est un espace clos ne comportant que l'espace interstitiel 27 comme échappatoire pour le flux d'air de recyclage 9. Ce dernier emprunte donc l'espace interstitiel 27 pour rejoindre le débouché 32 du volume interstitiel 27, le deuxième volume demi-cylindrique 41 et le volume amont 16. Le flux d'air de recyclage 9 traverse ensuite le filtre 23 en y collectant les polluants. Le flux d'air de recyclage 9 chargé des polluants est ensuite évacué hors du boîtier 3 par l'intermédiaire de la bouche d'admission d'air extérieur 4.

Il en résulte une évacuation des polluants hors du boîtier 3 sans aucun risque de polluer l'air contenu à l'intérieur de l'habitacle 10. Il en résulte également une évacuation de poussières éventuellement collectées par le filtre 23 lors de son fonctionnement en mode « tout extérieur » ou en mode « recyclage partiel » à partir d'un passage du flux d'air de recyclage 9 à travers le filtre 23 en un sens inverse à celui emprunté par le flux d'air extérieur 5 dans ces deux modes.

Il résulte de ces dispositions que le volet de mélange 20, et plus particulièrement le premier rebord et le deuxième rebord 37 qui l'équipent, constitue avantageusement un organe autorisant ou interdisant un passage d'air à l'intérieur de l'espace interstitiel 27, de telle sorte qu'une telle installation de ventilation, de chauffage et/ou de climatisation 1 ne nécessite pas d'équiper l'espace interstitiel 27 de volet supplémentaire.

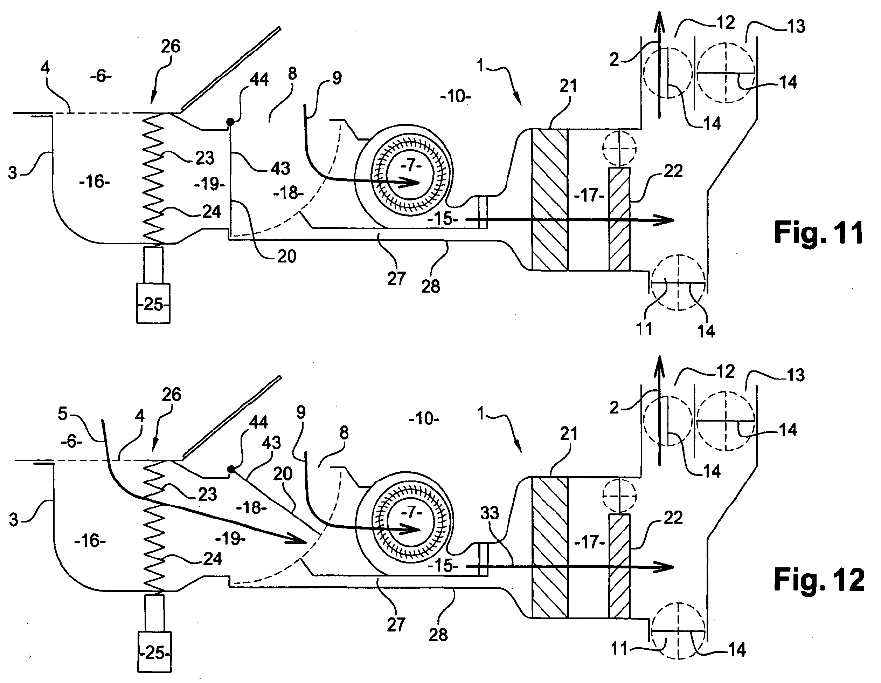

Sur les fig.11 à fig.14, le volet de mélange 20 est un volet drapeau comprenant une plaque 43 mobile autour d'un axe de pivotement 44. Le volet de mélange 20 est mobile entre une position de recyclage dans laquelle le volet de mélange 20 obture la bouche d'arrivée d'air extérieur 19 et une position extérieure dans laquelle le volet de mélange 20 obture la bouche d'admission d'air de recyclage 8. Le volet de mélange 20 est susceptible d'être disposé en une position de régénération dans laquelle le volet de mélange vient en butée contre le débouché 32 de l'espace interstitiel 27. Ces dispositions visent à empêcher une circulation d'air depuis le volume amont 16 et le volume aval 17 par l'intermédiaire de l'espace interstitiel 27 en mode « tout recyclage ». Ces dispositions visent aussi à permettre une circulation d'air depuis le volume amont 16 et le volume aval 17 par l'intermédiaire de l'espace interstitiel 27 en mode « recyclage partiel » ou « tout extérieur ». Ces dispositions visent aussi à permettre une circulation d'air depuis le volume aval 17 et le volume amont 16par l'intermédiaire de l'espace interstitiel 27 en mode « régénération ».

Sur la fig.11, le pulseur 15 est activé. La source d'alimentation électrique 25 est inactive de telle sorte que le filtre 23 n'est pas chauffé pour désorber les polluants. Le volet de mélange 20 est en position de recyclage. Au moins un volet de distribution d'air 14 est en position d'ouverture.

Ces dispositions permettent un mode de fonctionnement « tout recyclage » dans lequel seul l'air contenu à l'intérieur de l'habitacle 10 est traité thermiquement. Selon ce mode de fonctionnement, le flux d'air de recyclage 9 pénètre à l'intérieur de la chambre de mélange 18 par l'intermédiaire de la bouche d'admission d'air de recyclage 8 à partir de son aspiration par le pulseur 15. Puis, le flux d'air de recyclage 9 traverse le pulseur 15. Puis, le flux d'air de recyclage 9 est admis à l'intérieur du volume aval 17 à l'intérieur duquel le flux d'air de recyclage 9 est traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

Sur la fig.12, le pulseur 15 est activé. La source d'alimentation électrique 25 est inactive de telle sorte que le filtre 23 n'est pas chauffé pour désorber les polluants. Le volet de mélange 20 est disposé en une position moyenne située entre la position extérieure et la position de régénération. Au moins un volet de distribution d'air 14 est en position d'ouverture.

Ces dispositions permettent un mode de fonctionnement « recyclage partiel » dans lequel l'air contenu à l'intérieur de l'habitacle 10 est mélangé à de l'air extérieur avant d'être traité thermiquement. Selon ce mode de fonctionnement, le flux d'air de recyclage 9 pénètre par l'intermédiaire de la bouche d'admission d'air de recyclage 8 à l'intérieur de la chambre de mélange 18. Le flux d'air extérieur 5 pénètre à l'intérieur du volume amont 16 par l'intermédiaire de la bouche d'admission d'air extérieur 4. Le flux d'air extérieur 5 traverse ensuite le filtre 23 qui retient les polluants. Le flux d'air extérieur 5 pénètre ensuite à l'intérieur de la chambre de mélange 18 par l'intermédiaire de la bouche d'arrivée d'air extérieur 19. Le flux d'air extérieur 5 et le flux d'air de recyclage 9 sont mixés l'un à l'autre à l'intérieur et/ou en sortie de la chambre de mélange 18 en un flux d'air mélangé 33. Ce dernier traverse le pulseur 15 et pénètre à l'intérieur du volume aval 17 pour y être traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

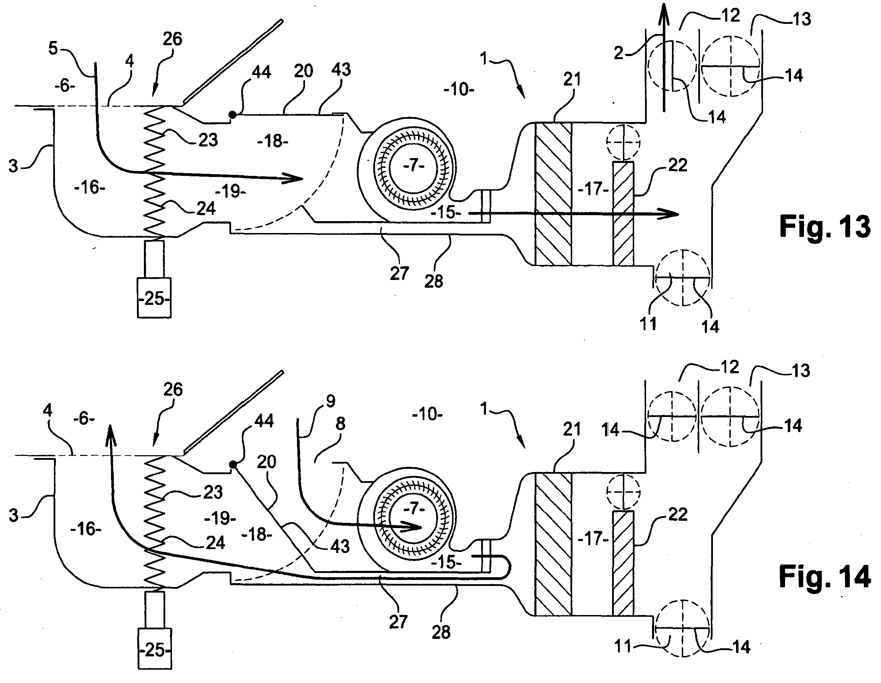

Sur la fig.13, le pulseur 15 est activé. La source d'alimentation électrique 25 est inactive de telle sorte que le filtre 23 n'est pas chauffé pour désorber les polluants. Le volet de mélange 20 est placé en position extérieure. Au moins un volet de distribution d'air 14 est en position d'ouverture.

Ces dispositions permettent un mode de fonctionnement « tout air extérieur » dans lequel seul le flux d'air extérieur 5 est traité thermiquement. Le flux d'air extérieur 5 pénètre à l'intérieur du volume amont 16 par l'intermédiaire de la bouche d'admission d'air extérieur 4. Le flux d'air extérieur 5 traverse ensuite le filtre 23 qui retient les polluants. Le flux d'air extérieur 5 pénètre à l'intérieur de la chambre de mélange 18 par l'intermédiaire de la bouche d'arrivée d'air extérieur 19. Finalement, le flux d'air extérieur 5 traverse le pulseur 15 et pénètre à l'intérieur du volume aval 17 pour y être traité thermiquement par l'évaporateur 21 et/ou le radiateur 22. Le flux d'air traité thermiquement 2 est ensuite évacué hors du boîtier 3 vers l'habitacle 10 par l'intermédiaire d'au moins une des bouches de délivrance d'air 11,12,13.

Sur la fig.14, le pulseur 15 est activé. La source d'alimentation électrique 25 est active de telle sorte que le filtre 23 est chauffé pour désorber les polluants. Le volet de mélange 20 est placé en position de régénération. Tous les volets de distribution d'air 14 sont placés en position de fermeture.

Ces dispositions permettent un mode de fonctionnement « régénération du filtre » dans lequel les polluants adsorbés par le filtre 23 sont évacués hors du boîtier 3 après leur désorption. Le flux d'air de recyclage 9 pénètre à l'intérieur de la chambre de mélange 18. Le flux d'air de recyclage 9 traverse ensuite le pulseur 15 et pénètre à l'intérieur du volume aval 17. Les volets de distribution d'air 14 étant tous placés en position de fermeture, le volume aval est un espace clos ne comportant que l'espace interstitiel 27 comme échappatoire pour le flux d'air de recyclage 9. Ce dernier emprunte donc l'espace interstitiel 27 pour rejoindre le débouché 32 du volume interstitiel 27, la chambre de mélange 18 et le volume amont 16. Le flux d'air de recyclage 9 traverse ensuite le filtre 23 en y collectant les polluants. Le flux d'air de recyclage 9 chargé des polluants est ensuite évacué hors du boîtier 3 par l'intermédiaire de la bouche d'admission d'air extérieur 4.

Il en résulte une évacuation des polluants hors du boîtier 3 sans aucun risque de polluer l'air contenu à l'intérieur de l'habitacle 10. Il en résulte également une évacuation de poussières éventuellement collectées par le filtre 23 lors de son fonctionnement en mode « tout extérieur » ou en mode « recyclage partiel » à partir d'un passage du flux d'air de recyclage 9 à travers le filtre 23 en un sens inverse à celui emprunté par le flux d'air extérieur 5 dans ces deux modes.

Il résulte de ces dispositions que le volet de mélange 20 constitue avantageusement un organe autorisant ou interdisant un passage d'air à l'intérieur de l'espace interstitiel 27, de telle sorte qu'une telle installation de ventilation, de chauffage et/ou de climatisation 1 ne nécessite pas d'équiper l'espace interstitiel 27 de volet supplémentaire.

Il découle finalement que les installations de ventilation, de chauffage et/ou de climatisation 1 précédemment décrites sont simples et permettent une régénération du filtre 23 aisée à mettre en oeuvre à partir d'une association particulière précédemment décrite de l'espace interstitiel 27 et du volet de mélange 20, et d'une mise en oeuvre approprié du pulseur 15, du volet de distribution 14 et de la source d'alimentation électrique 25 reliée à la résistance électrique 24, sans avoir recours à tout autre organe de ladite installation 1.

## Revendications

1. Installation de ventilation, de chauffage et/ou de climatisation (1) d'un véhicule automobile, ladite installation (1) comprenant un boîtier (3) logeant au moins un pulseur (15) interposé entre un volume amont (16) et un volume aval (17) délimités par le boîtier (3), le volume amont (16) logeant une chambre de mélange (18) pourvue d'un volet de mélange (20), le boîtier (3) logeant un filtre (23), ledit filtre (23) étant logé à l'intérieur du volume aval (17), en étant interposé entre le pulseur (15) et des moyens de traitement thermique (21,22), ladite installation (1) étant en outre équipée de moyens de régénération (27,20,24,25) du filtre (23), **caractérisée en ce que** les moyens de régénération (27,20,24,25,14) du filtre (23) comprennent un espace interstitiel (27) reliant le volume amont (16) et le volume aval (17), ledit espace interstitiel (27) étant ménagé à l'intérieur du boîtier (3).

2. Installation (1) selon la revendication précédente, **caractérisée en ce que** l'espace interstitiel (27) est adjacent au pulseur (15) et à la chambre de mélange (18).

3. Installation (1) selon l'une quelconque des revendications précédentes, **caractérisée en ce que** les moyens de régénération (27,20,24,25,14) du filtre (23) comprennent le volet de mélange (20) qui constitue un moyen d'obturation d'un débouché (32) de l'espace interstitiel (27) à l'intérieur du volume amont (16).

4. Installation (1) selon l'une quelconque des revendications précédentes, **caractérisée en ce que** les moyens de régénération (27,20,24,25,14) du filtre (23) comprennent une résistance électrique (24) équipant le filtre (23), la résistance électrique (24) étant associée à une source d'alimentation électrique (25).

5. Installation (1) selon l'une quelconque des revendications précédentes, **caractérisée en ce que** les moyens de régénération (27,20,24,25,14) du filtre (23) comprennent au moins un volet de distribution d'air (14) équipant une bouche de délivrance d'air (11,12,13).

6. Installation (1) selon l'une quelconque des revendications précédentes, **caractérisée en ce que** le filtre (23) est logé à l'intérieur du volume amont (16).

7. Installation (1) selon la revendication 6, **caractérisée en ce que** le filtre (23) est interposé entre la chambre de mélange (18) et le pulseur (15).

8. Installation (1) selon la revendication 6, **caractérisée en ce que** le filtre (23) est interposé entre une bouche d'admission d'air extérieur (4) et la chambre de mélange (18).

9. Installation (1) selon l'une quelconque des revendications 1 à 5, **caractérisée en ce que** le filtre (23) est logé à l'intérieur du volume aval (17), en étant interposé entre le pulseur (15) et des moyens de traitement thermique (21,22).

10. Procédé de régénération du filtre (23) équipant une installation (1) selon les revendications 3, 4 et 5, **caractérisé en ce que** le procédé consiste à effectuer les opérations suivantes :
- placer en une position de régénération le volet de mélange (20) de manière à laisser libre le débouché (32) de l'espace interstitiel (27), une bouche d'admission d'air extérieur (4) et une bouche d'admission d'air de recyclage (8),
- placer en position de fermeture le volet de distribution d'air (14),
- mettre en marche la source d'alimentation électrique (25) de la résistance électrique (24),
- mettre en marche le pulseur (15).

## Patentansprüche

1. Lüftungs-, Heiz- und/oder Klimaanlage (1) eines Automobilfahrzeugs, wobei die Anlage (1) ein Gehäuse (3) umfasst, in dem mindestens ein Gebläse (15) untergebracht ist, das zwischen einem stromaufwärtigen Volumen (16) und einem stromabwärtigen Volumen (17) angeordnet ist, die von dem Gehäuse (3) begrenzt werden, wobei in dem stromaufwärtigen Volumen (16) eine Mischkammer (18) untergebracht ist, die mit einer Mischklappe (20) versehen ist, wobei in dem Gehäuse (3) ein Filter (23) untergebracht ist, wobei der Filter (23) im Inneren des stromabwärtigen Volumens (17) untergebracht ist, indem dieser zwischen dem Gebläse (15) und Wärmebehandlungsmitteln (21, 22) angeordnet ist, wobei die Anlage (1) außerdem mit Regenerierungsmitteln (27, 20, 24, 25) des Filters (23) ausgestattet ist,
**dadurch gekennzeichnet, dass** die Regenerierungsmittel (27, 20, 24, 25, 14) des Filters (23) einen Zwischenraum (27) umfassen, der das stromaufwärtige Volumen (16) und das stromabwärtige Volumen (17) verbindet, wobei der Zwischenraum (27) im Inneren des Gehäuses (3) aufgenommen ist.

2. Anlage (1) nach dem vorhergehenden Anspruch,
**dadurch gekennzeichnet, dass** der Zwischenraum (27) dem Gebläse (15) und der Mischkammer (18) benachbart ist.

3. Anlage (1) nach einem der vorhergehenden Ansprüche,
**dadurch gekennzeichnet, dass** die Regenerierungsmittel (27, 20, 24, 25, 14) des Filters (23) die Mischklappe (20) umfassen, die ein Mittel zum Verschließen eines Auslasses (32) des Zwischenraums (27) im Inneren des stromaufwärtigen Volumens (16) darstellt.

4. Anlage (1) nach einem der vorhergehenden Ansprüche,
**dadurch gekennzeichnet, dass** die Regenerierungsmittel (27, 20, 24, 25, 14) des Filters (23) einen elektrischen Widerstand (24) umfassen, mit dem der Filter (23) ausgestattet ist, wobei der elektrische Widerstand (24) mit einer elektrischen Stromversorgungsquelle (25) assoziiert ist.

5. Anlage (1) nach einem der vorhergehenden Ansprüche,
**dadurch gekennzeichnet, dass** die Regenerierungsmittel (27, 20, 24, 25, 14) des Filters (23) mindestens eine Luftverteilungsklappe (14) umfassen, mit der eine Luftzufuhröffnung (11, 12, 13) ausgestattet ist.

6. Anlage (1) nach einem der vorhergehenden Ansprüche,
**dadurch gekennzeichnet, dass** der Filter (23) im Inneren des stromaufwärtigen Volumens (16) untergebracht ist.

7. Anlage (1) nach Anspruch 6,
**dadurch gekennzeichnet, dass** der Filter (23) zwischen der Mischkammer (18) und dem Gebläse (15) angeordnet ist.

8. Anlage (1) nach Anspruch 6,
**dadurch gekennzeichnet, dass** der Filter (23) zwischen einer Öffnung (4) zur Aufnahme von Außenluft und der Mischkammer (18) angeordnet ist.

9. Anlage (1) nach einem der Ansprüche 1 bis 5,
**dadurch gekennzeichnet, dass** der Filter (23) im Inneren des stromabwärtigen Volumens (17) untergebracht ist, indem dieser zwischen dem Gebläse (15) und den Wärmebehandlungsmitteln (21, 22) angeordnet ist.

10. Verfahren zur Regenerierung des Filters (23), mit dem eine Anlage (1) nach den Ansprüchen 3, 4 und 5 ausgestattet ist,
**dadurch gekennzeichnet, dass** das Verfahren darin besteht, die folgenden Schritte durchzuführen:
- Platzieren der Mischklappe (20) in eine Regenerierungsposition derart, dass der Auslass (32) des Zwischenraums (27), eine Öffnung (4) zur Aufnahme von Außenluft und eine Öffnung (8) zur Aufnahme zurückgeführter Luft frei gelassen werden,
- Platzieren der Luftverteilungsklappe (14) in eine geschlossene Position,
- Inbetriebnehmen der elektrischen Stromversorgungsquelle (25) des elektrischen Widerstands (24),
- Inbetriebnehmen des Gebläses (15).

## Claims

1. Heating, ventilation and/or air conditioning installation (1) for a motor vehicle, said installation (1) comprising a casing (3) housing at least one blower (15) interposed between an upstream volume (16) and a downstream volume (17) which are delimited by the casing (3), the upstream volume (16) housing a mixing chamber (18) provided with a mixing flap (20), the casing (3) housing a filter (23), said filter (23) being housed inside the downstream volume (17) and interposed between the blower (15) and heat treatment means (21, 22), said installation (1) furthermore being equipped with regeneration means (27, 20, 24, 25) for regenerating the filter (23), **characterized in that** the regeneration means (27, 20, 24, 25, 14) for regenerating the filter (23) comprise an interstitial space (27) connecting the upstream volume (16) and the downstream volume (17), said interstitial space (27) being contained inside the casing (3).

2. Installation (1) according to the preceding claim, **characterized in that** the interstitial space (27) is adjacent to the blower (15) and to the mixing chamber (18).

3. Installation (1) according to any one of the preceding claims, **characterized in that** the regeneration means (27, 20, 24, 25, 14) for regenerating the filter (23) comprise the mixing flap (20) which constitutes a means of closing off an outlet (32) of the interstitial space (27) into the upstream volume (16).

4. Installation (1) according to any one of the preceding claims, **characterized in that** the regeneration means (27, 20, 24, 25, 14) for regenerating the filter (23) comprise a resistor (24) with which the filter (23) is equipped, the resistor (24) being associated with a source (25) of electrical power.

5. Installation (1) according to any one of the preceding claims, **characterized in that** the regeneration means (27, 20, 24, 25, 14) for regenerating the filter (23) comprise at least one air distribution flap (14) with which an air delivery vent (11, 12, 13) is equipped.

6. Installation (1) according to any one of the preceding claims, **characterized in that** the filter (23) is housed inside the upstream volume (16).

7. Installation (1) according to Claim 6, **characterized in that** the filter (23) is interposed between the mixing chamber (18) and the blower (15).

8. Installation (1) according to Claim 6, **characterized in that** the filter (23) is interposed between an external-air intake vent (4) and the mixing chamber (18).

9. Installation (1) according to any one of Claims 1 to 5, **characterized in that** the filter (23) is housed inside the downstream volume (17), being interposed between the blower (15) and heat treatment means (21, 22).

10. Method of regenerating the filter (23) with which an installation (1) according to Claims 3, 4 and 5 is equipped, **characterized in that** the method consists in performing the following operations:
- placing the mixing flap (20) in a regeneration position so as to leave the outlet (32) of the interstitial space (27), an external-air intake vent (4) and a recycling-air intake vent (8) uncovered,
- placing the air distribution flap (14) in the closed position,
- switching on the source (25) of electrical power of the resistor (24),
- switching on the blower (15).
